# EUROPEAN PATENT SPECIFICATION

(11) **EP 2 479 830 B1**
(45) Date of publication and mention of the grant of the patent: **25.10.2017**
(21) Application number: 12151508.4
(22) Date of filing: 18.01.2012
(51) Int. Cl.: H01M 10/04, H01M 2/26, H01M 2/06, H01M 2/02

(54) **Secondary battery comprising a flexible current collector**
Sekundärbatterie mit einem flexiblen Stromsammler
Batterie secondaire comprenant un collecteur de courant souple

(30) Priority: 24.01.2011 US 201161435665 P; 09.11.2011 US 201113293006
(43) Date of publication of application: 25.07.2012
(73) Proprietor: Samsung SDI Co., Ltd., Gyeonggi-do (KR); Robert Bosch GmbH, 70442 Stuttgart (DE)
(72) Inventor: Kim, Dukjung, Yongin-Si (KR)
(74) Representative: Gulde & Partner

(56) References cited:
- JP-A- 2001 185 120
- JP-A- 2008 123 695
- JP-A- 2009 252 499
- US-A1- 2006 063 063
- US-A1- 2010 167 107

## Description

The present invention relates to a secondary battery.

### Description of the Related Art

Secondary batteries, unlike primary batteries, are rechargeable. Low-capacity secondary batteries are widely used in high-tech electronic devices such as cellular phones, notebook computers, and camcorders. High-capacity secondary batteries are widely used as motor-driving power sources of electric vehicles or hybrid vehicles.

In general, such a secondary battery includes an electrode assembly disposed in a can, collectors, and electrode terminals. As secondary batteries are used in electric vehicles or hybrid vehicles, it is necessary to increase the capacities of the secondary batteries by efficiently using the inner spaces of the secondary batteries, and also to protect electrode assemblies of the secondary batteries from external impacts to increase reliability. JP 2008 123695 A and JP 2009 252499 A disclose prismatic batteries comprising flexible lead wires.

### SUMMARY

According to the present invention, a secondary battery has an inside space which can be optimally used to prevent or substantially prevent a short circuit of an electrode assembly caused by an impact and increase flexibility in component selection and disposition.

According to the present invention, a secondary battery according to claim 1 is provided. A secondary battery includes: an electrode assembly wound about an axis extending in a first direction and including a coating portion having an active material thereon, and a non-coating portion at an end of the electrode assembly along the first direction; a can containing the electrode assembly; a cap plate sealing an opening of the can; a terminal protruding outside the can; and a flexible current collector electrically connected between the non-coating portion of the electrode assembly and the terminal.

In one embodiment, a first end of the flexible current collector is coupled to the non-coating portion, and a second end of the flexible current collector is coupled to the terminal. The end of the flexible current collector may be movable relative to the second end of the flexible current collector.

The flexible current collector may include aluminum or copper. In one embodiment, the flexible current collector includes at least one wire. The at least one wire includes a plurality of wires that are twisted together along a length of the flexible current collector. The secondary battery according to the invention further includes an insulation member between the cap plate and the terminal. The insulation member is between and contacting the can and the first end of the electrode assembly in the first direction. The insulation member fixes the electrode assembly from movement in the can.

In one embodiment, a secondary battery further includes another electrode assembly in the can, the another electrode assembly including a coating portion having an active material thereon, and a non-coating portion at an end of the another electrode assembly along the first direction. The secondary battery may further include another flexible current collector electrically connected between the non-coating portion of the another electrode assembly and the terminal. In one embodiment, the secondary battery further includes an insulation member between the cap plate and the terminal, and the insulation member fixes the electrode assembly and the another electrode assembly from movement in the can. The flexible current collector and the another flexible current collector may respectively connect the electrode assembly and the another electrode assembly to the terminal in parallel to each other.

In one embodiment, the electrode assembly further includes another non-coating portion at a second end of the electrode assembly opposite the first end, and the secondary battery further includes another terminal protruding outside the can, and another flexible current collector electrically connected between the another non-coating portion of the electrode assembly and the another terminal.

In one embodiment, the flexible current collector has a substantially circular cross-sectional shape. In one embodiment, the flexible current collector has a substantially flat shape. The flexible current collector may be coupled to the non-coating portion by ultrasonic welding. The flexible current collector may be coated with a material selected from the group consisting of fluoro elastomer, elastic plastic, silicon, fluorine, and combinations thereof.

In one embodiment, the non-coating portion includes a first non-coating portion at an outermost layer of the electrode assembly and a second non-coating portion at an edge of the electrode assembly in the first direction, and the flexible current collector is attached to the first non-coating portion or the second non-coating portion. The non-coating portion of the electrode assembly may be electrically insulated from the can. According to another embodiment of the present invention, a secondary battery includes: a can including an inner space; an electrode assembly including a coating portion and a non-coating portion and inserted in the can; at least one wire including an end connected to the non-coating portion; an electrode terminal connected to the other end of the wire; an insulation member disposed at an upper part of the electrode terminal; and a cap plate disposed at an upper part of the insulation member, wherein the electrode terminal penetrates the cap plate.

The wire may be coupled to the non-coating portion by ultrasonic welding. The wire may be coated. The wire may include a plurality of strings. The wire may include a plurality of stings that are twisted. The insulation member may be disposed between the electrode terminal and the cap plate.

According to another aspect of embodiments of the present invention, the non-coating portions of the electrode assembly are connected to the electrode terminals by using wires so that flexibility can be increased in the selection of components while reducing manufacturing costs and increasing production efficiency.

According to an aspect of another embodiment of the present invention in which wires are used each having a plurality of strings, the wires can be more flexibly adjusted according to movement of the electrode assembly.

According to an aspect of another embodiment of the present invention, the durability of the wires can be improved by twisting the plurality of strings of the wires.

### BRIEF DESCRIPTION OF THE DRAWINGS

The above and other features and advantages will become more apparent to those of ordinary skill in the art by describing in detail some exemplary embodiments of the present invention with reference to the attached drawings. Moreover, additional aspects and/or advantages of embodiments of the present invention are set forth in the following description and accompanying drawings, or may be obvious in view thereof to those skilled in the art.
FIG. 1 is a perspective view of a secondary battery according to an embodiment of the present invention;
FIG. 2 is a sectional view of the secondary battery of FIG. 1, taken along the line A-A';
FIG. 3 is an exploded perspective view of the secondary battery of FIG. 1;
FIG. 4 is a sectional view of a secondary battery according to another embodiment of the present invention;
FIG. 5 is a sectional view of a secondary battery according to another embodiment of the present invention; and
FIG. 6 is an exploded perspective view of a secondary battery according to another embodiment of the present invention.

### DETAILED DESCRIPTION

Some exemplary embodiments of the present invention will now be described more fully hereinafter with reference to the accompanying drawings.

A structure of a secondary battery according to an exemplary embodiment of the present invention will be described below.

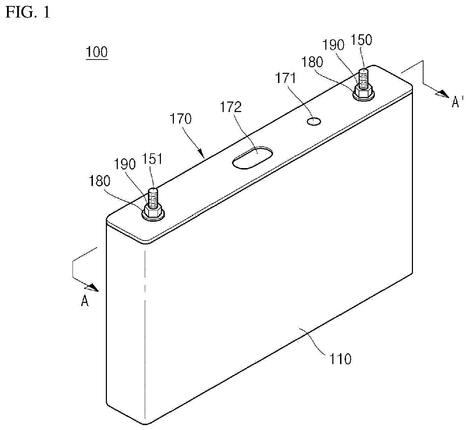

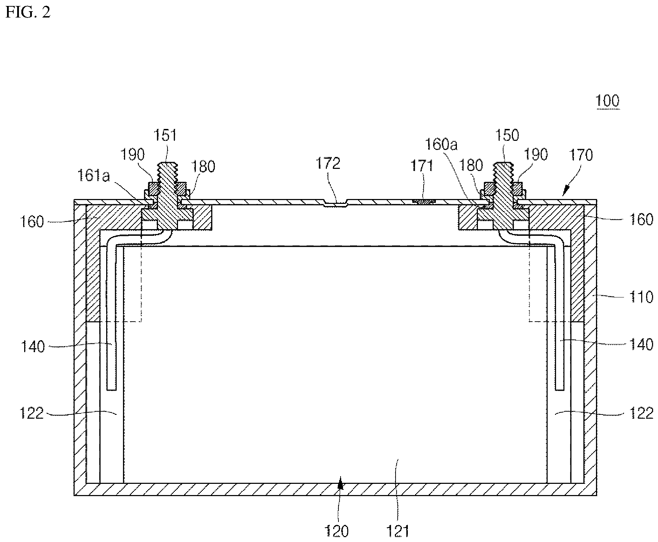

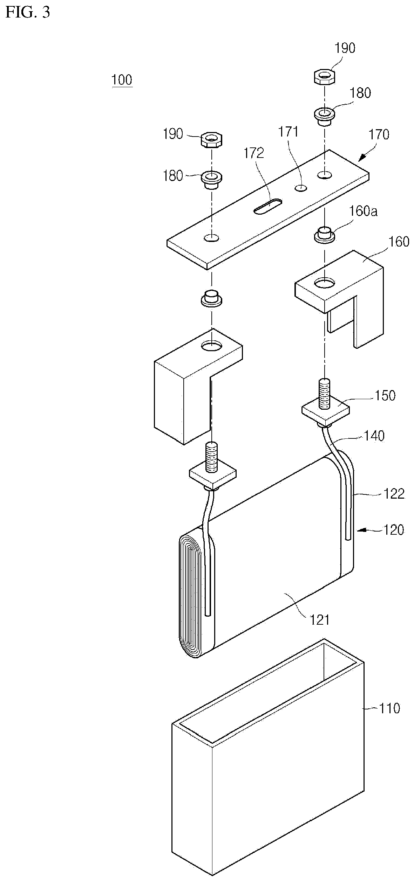

FIG. 1 is a perspective view illustrating a secondary battery 100 according to an exemplary embodiment of the present invention. FIG. 2 is a sectional view illustrating the secondary battery 100. FIG. 3 is an exploded perspective view illustrating the secondary battery 100.

Referring to FIGS. 1 through 3, the secondary battery 100 includes a can 110, an electrode assembly 120, flexible current collectors 140, electrode terminals 150 and 151, first insulation members 160, a cap plate 170, and second insulation members 180. Nuts 190 may be tightened on the electrode terminals 150 and 151 disposed on the outer side of the cap plate 170.

The can 110 may have a shape such as a hexahedron shape. The can 110 includes a space to receive the electrode assembly 120. The can 110 may be formed of a conductive metal material, such as aluminum, aluminum alloy, and/or steel plated with nickel.

The electrode assembly 120 is disposed in the can 110. The electrode assembly 120 includes a separator (not shown) disposed between positive and negative electrode plates. The electrode assembly 120 may be a jelly roll-type electrode assembly in which the positive electrode plate, the separator, and the negative electrode plate are wound about an axis, such as in a spiral or vortex shape. The electrode assembly 120 includes a coating portion 121 coated with an active material, and non-coating portions 122 where the electrode plates are exposed and the active material is not coated. The non-coating portions 122 protrude from both sides of the coating portion 121 and are connected to the flexible current collectors 140.

The flexible current collectors 140 are coupled to the respective non-coating portions 122 of the electrode assembly 120. That is the flexible current collectors 140 are provided in a pair and are connected to the positive and negative electrode plates of the electrode assembly 120, respectively. The flexible current collectors 140 may be wires. Ends of the current collectors 140 are respectively connected to the electrode plates by coupling of the current collectors 140 to the non-coating portions 122. The current collectors 140 are coupled to the non-coating portions 122 by ultrasonic welding but, alternatively, may be coupled by any other suitable device or method. Further, the other ends of the current collectors 140 are respectively connected (e.g., by ultrasonic welding) to the electrode terminals 150 and 151 so that the non-coating portions 122 are electrically connected to the respective electrode terminals 150 and 151.

The current collectors 140 are flexible such that the coupling between the non-coating portions 122 and the current collectors 140 can be maintained even when an impact is applied to the secondary battery 100. For example, the current collectors 140 may be formed of aluminum (Al) or copper (Cu).

Because the current collectors 140 are flexible, the positions of the electrode assembly 120 and the electrode terminals 150 and 151 are not rigidly determined. Also, since the electrode terminals 150 and 151 can be disposed at desired positions, inner components of the secondary battery 100 can be flexibly selected. Therefore, the number and/or cost of components of the secondary battery 100 can be decreased. The term 'flexible' stands for plasticity of the conductive material used and describes the deformation of a material undergoing non-reversible changes of shape in response to applied forces.

In addition, since the current collectors 140 occupy less space than conventional collectors, space within the can 110 can be efficiently used, for example, to reduce the weight of the secondary battery 100. The current collectors 140 may be coated, such as with a material selected from the group consisting of fluoro elastomer, elastic plastic, silicon, fluorine, and combinations thereof, for insulation purposes, so as not to react with an electrolyte contained in the can 110, for example.

The electrode terminals 150 and 151 are electrically connected to the electrode assembly 120 through the current collectors 140. The electrode terminals 150 and 151 are fixed to the cap plate 170 by using the first insulation members 160 so that the electrode terminals 150 and 151 can be electrically insulated from the cap plate 170. The electrode terminal 150 connected to one of the current collectors 140 has a first polarity, and the electrode terminal 151 connected to the other of the current collectors 140 has a second polarity. The electrode terminals 150 and 151 protrude outward from the cap plate 170.

The first insulation members 160 are coupled to upper parts of the electrode terminals 150 and 151. Lower sides of the first insulation members 160 may be supported by the electrode terminals 150 and 151 and may be fixed by tightening the nuts 190 on the electrode terminals 150 and 151.

Due to the first insulation members 160, the electrode terminals 150 and 151 and the current collectors 140 do not make contact with the can 110 so that the can 110 can be electrically independent from the electrode terminals 150 and 151 and the current collectors 140. Further, the first insulation members 160 fix the electrode assembly 120 in the can 110 so that the electrode assembly 120 does not move in the can 110.

The first insulation members 160 may include gaskets 160a to prevent or substantially prevent leakage of electrolyte between the cap plate 170 and the first insulation members 160. The gaskets 160a fill gaps between the first insulation members 160 and the cap plate 170 to prevent or substantially prevent leakage of the electrolyte.

The cap plate 170 is coupled to an upper part of the can 110 and seals the can 110. The cap plate 170 is welded along the edge of the can 110. After electrolyte is filled in the can 110, an injection hole of the cap plate 170 may be closed by using an injection hole plug 171. In addition, the cap plate 170 may include a safety vent 172 which is thinner than other regions of the cap plate 170 so that the safety vent 172 can be first opened if the internal pressure in the can 110 reaches or exceeds a predetermined value.

The electrode terminals 150 and 151 penetrate the cap plate 170 and protrude upward from the cap plate 170. The electrode terminals 150 and 151 are electrically insulated from the cap plate 170 by the first insulation members 160 and the gaskets 160a.

The second insulation members 180 are coupled to the electrode terminals 150 and 151 from an upper side of the cap plate 170. The second insulation members 180 are disposed around the electrode terminals 150 and 151 between the electrode terminals 150 and 151 and the cap plate 170. Due to the second insulation members 180, the electrode terminals 150 and 151 do not make contact with the cap plate 170 so that the electrode terminals 150 and 151 can be electrically insulated from the cap plate 170. The nuts 190 are coupled to the electrode terminals 150 and 151 from the upper side of the second insulation members 180. The nuts 190 are threadedly coupled to upper parts of the electrode terminals 150 and 151. The electrode terminals 150 and 151 are physically coupled to the cap plate 170 by the nuts 190 so that the positions of the electrode terminals 150 and 151 can be fixed.

As described above, in the secondary battery 100 according to one embodiment, the non-coating portions 122 of the electrode assembly 120 are connected to the electrode terminals 150 and 151 through the current collectors 140 so that the non-coating portions 122 of the electrode assembly 120 are not detached even when an impact is applied.

In addition, because the current collectors 140 have smaller volumes than conventional collectors, the inside space of the can 110 can be efficiently used, and the electrode terminals 150 and 151 can be flexibly designed. In addition, due to the current collectors 140, the weight of the secondary battery 100 can be reduced, and the number and cost of components of the secondary battery 100 can be reduced.

A secondary battery according to another embodiment of the present invention will now be described below.

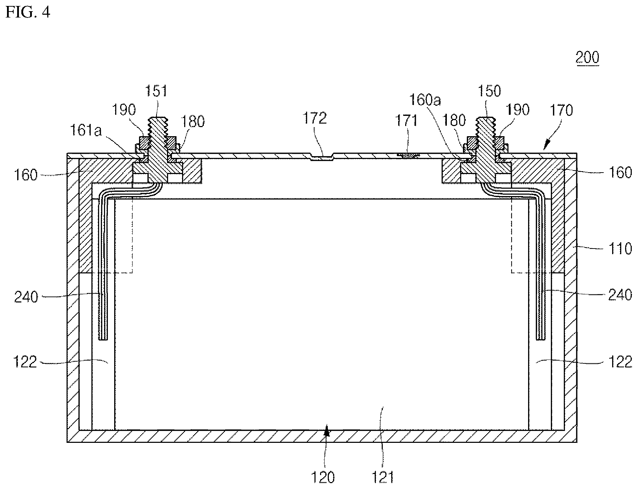

FIG. 4 is a sectional view illustrating a secondary battery 200 according to another embodiment of the present invention. Elements having the same structures and functions as those of the corresponding elements of the previously described embodiment are denoted by the same reference numerals, and only the differences will be described.

Referring to FIG. 4, the secondary battery 200 according to one embodiment includes the can 110, the electrode assembly 120, current collectors 240, the electrode terminals 150 and 151, the first insulation members 160, the cap plate 170, the second insulation members 180, and the nuts 190.

In the secondary battery 200, each of the current collectors 240 includes a plurality of wires, or strings. Since each of the current collectors 240 is constituted by a plurality of separate wires, the current collectors 240 can be flexibly adjusted according to a movement of the electrode assembly 120.

In addition, since the current collectors 240 may experience a lesser stress from a movement of the electrode assembly 120 as compared with a stress exerted on a single wire, the connection between the electrode assembly 120 and the electrode terminals 150 and 151 using the current collectors 240 can be more reliably maintained. That is, the coupling reliability of the current collectors 240 is high.

A secondary battery according to another embodiment of the present invention will now be described below.

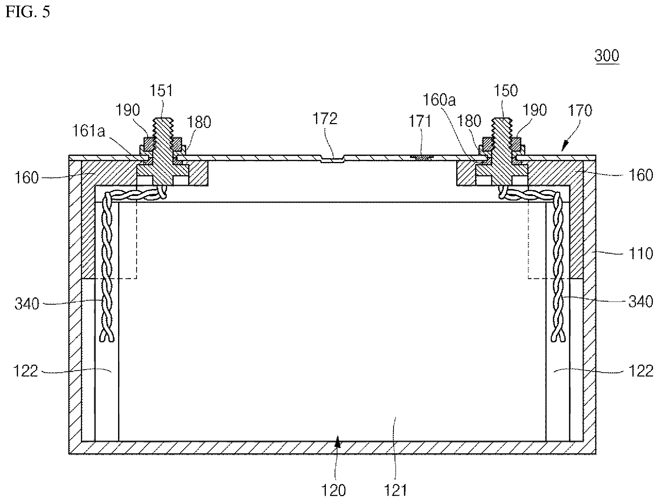

FIG. 5 is a sectional view illustrating a secondary battery 300 according to another embodiment of the present invention.

Referring to FIG. 5, the secondary battery 300 according to one embodiment includes the can 110, the electrode assembly 120, current collectors 340, the electrode terminals 150 and 151, the first insulation members 160, the cap plate 170, the second insulation members 180, and the nuts 190.

In the secondary battery 300, each of the current collectors 340 includes a plurality of wire, or strings. The plurality of wires of the current collectors 340 are twisted. Therefore, the current collectors 340 can be flexibly adjusted when the electrode assembly 120 is moved, and in addition, the durability of the current collectors 340 can be improved.

Therefore, fatigue failure of the current collectors 340 caused by movement of the electrode assembly 120 can be reduced, and the connection between the electrode assembly 120 and the electrode terminals 150 and 151 can be reliably maintained. A secondary battery according to another embodiment of the present invention will now be described below.

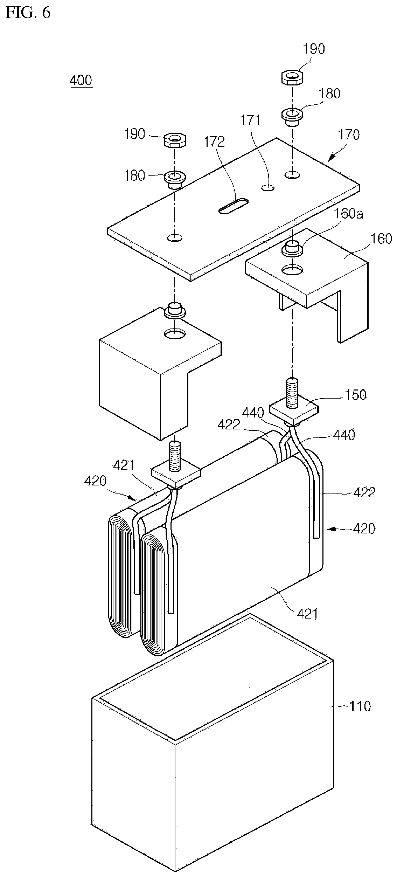

FIG. 6 is an exploded perspective view illustrating a secondary battery 400 according to another embodiment.

Referring to FIG. 6, the secondary battery 400 according to one embodiment includes the can 110, a plurality of electrode assemblies 420, current collectors 440, the electrode terminals 150 and 151, the first insulation members 160, the cap plate 170, the second insulation members 180, and the nuts 190.

The secondary battery includes a plurality of electrode assemblies 420 in the can 110. The number of the electrode assemblies 420 is at least two. The electrode assemblies 420 are inserted in the can 110. In one embodiment, each of the electrode assemblies 420 includes a coating portion 421 and non-coating portions 422. In FIG. 6, the electrode assemblies 420 are shown being horizontally arranged side by side. However, in another embodiment, the electrode assemblies 420 may be vertically stacked.

The current collectors 440, in one embodiment, are coupled to the non-coating portions 422 of the electrode assemblies 420. The current collectors 440 are respectively connected to the electrode terminals 150 and 151 so that the electrode assemblies 420 can be electrically connected to the electrode terminals 150 and 151.

The non-coating portions 422 of the electrode assemblies 420 may be connected to the electrode terminals 150 and 151 through the current collectors 440 according to polarities so that the electrode assemblies 420 can be connected in parallel to each other. Alternatively, the non-coating portions 422 of the electrode assemblies 420 may be connected in series to each other by the current collectors 440, and then the current collectors 440 may be connected to the electrode terminals 150 and 151 (this configuration is not shown).

Since the current collectors 440 occupy less space in the can 110 than conventional collectors, the plurality of electrode assemblies 420 can be disposed in the can 110. That is, due to the current collectors 440, the secondary battery 400 can include more electrode assemblies 420 to increase capacity.

## Claims

1. A secondary battery (100, 200, 300, 400) comprising:
an electrode assembly (120, 420) wound about an axis extending in a first direction and comprising a coating portion (121, 421) having an active material thereon, and a non-coating portion (122, 422) at an end of the electrode assembly (120, 420);
a can (110) containing the electrode assembly (120, 420);
a cap plate (170) sealing an opening of the can (110);
a terminal (150, 151) protruding outside the can (110);
a flexible current collector (140, 240, 340, 440) electrically connected between the non-coating portion (122, 422) of the electrode assembly (120, 420) and the terminal (150, 151); and
an insulation member (160) provided between the cap plate (110) and the terminal (150, 151) **characterized in that** the insulation member (160) is between and contacting the can (110) and the electrode assembly (120, 420) such that the insulation member (160) fixes the electrode assembly (120, 420) from movement in the can (110).

2. The secondary battery of claim 1, wherein a first end of the flexible current collector (140, 240, 340, 440) is coupled to the non-coating portion (122, 422), and a second end of the flexible current collector (140, 240, 340, 440) is coupled to the terminal (150, 151).

3. The secondary battery of claim 2, wherein the first end of the flexible current collector (140, 240, 340, 440) is movable relative to the second end of the flexible current collector (140, 240, 340, 440).

4. The secondary battery of one of the preceding claims, wherein the flexible current collector (140, 240, 340, 440) includes or consists of aluminum or copper.

5. The secondary battery of one of the preceding claims, wherein the flexible current collector (140, 240, 340, 440) comprises at least one wire.

6. The secondary battery of claim 5, wherein the at least one wire comprises a plurality of wires that are twisted together along a length of the flexible current collector (340).

7. The secondary battery of one of the preceding claims, further comprising another electrode assembly (420) in the can (110), the another electrode assembly (420) comprising a coating portion (421) having an active material thereon, and a non-coating portion (422) at an end of the another electrode assembly (420) along the first direction.

8. The secondary battery of claim 7, further comprising another flexible current collector (440) electrically connected between the non-coating portion (422) of the another electrode assembly (420) and the terminal (150, 151).

9. The secondary battery of claim 7, wherein the flexible current collector (440) and the another flexible current collector (440) respectively connect the electrode assembly (420) and the another electrode assembly (420) to the terminal (150, 151) in parallel to each other.

10. The secondary battery of one of the preceding claims, wherein the flexible current collector (140, 240, 340, 440) has a circular cross-sectional shape or a flat shape.

11. The secondary battery of one of the preceding claims, wherein the flexible current collector (140, 240, 340, 440) is coated with a material selected from the group consisting of fluoro elastomer, elastic plastic, silicon, fluorine, and combinations thereof.

12. The secondary battery of one of the preceding claims, wherein the non-coating portion (122, 422) of the electrode assembly (120, 420) is electrically insulated from the can (110).

## Patentansprüche

1. Sekundärbatterie (100, 200, 300, 400), aufweisend:
eine Elektrodenanordnung (120, 420), die um eine Achse, die sich in eine erste Richtung erstreckt, gewickelt ist und einen Beschichtungsabschnitt (121, 421), der ein aktives Material darauf aufweist, und einen Nicht-Beschichtungsabschnitt (122, 422) an einem Ende der Elektrodenanordnung (120, 420) aufweist;
eine Dose (110), die die Elektrodenanordnung (120, 420) enthält;
eine Deckplatte (170), die eine Öffnung der Dose (110) abdichtet;
einen Anschluss (150, 151), der aus der Dose herausragt (110);
einen flexiblen Stromsammler (140, 240, 340, 440), der elektrisch zwischen den Nicht-Beschichtungsabschnitt (122, 422) der Elektrodenanordnung (120, 420) und den Anschluss (150, 151) geschaltet ist; und
ein Isolierelement (160), das zwischen der Deckplatte (110) und dem Anschluss (150, 151) bereitgestellt wird, **dadurch gekennzeichnet, dass** das Isolierelement (160) zwischen der Dose (110) und der Elektrodenanordnung (120, 420) ist und mit diesen in Kontakt steht, derart, dass das Isolierelement (160) die Elektrodenanordnung (120, 420) gegen Bewegung in der Dose (110) sichert.

2. Sekundärbatterie nach Anspruch 1, wobei ein erstes Ende des flexiblen Stromsammlers (140, 240, 340, 440) mit dem Nicht-Beschichtungsabschnitt (122, 422) gekoppelt ist und ein zweites Ende des flexiblen Stromsammlers (140, 240, 340, 440) mit dem Anschluss (150, 151) gekoppelt ist.

3. Sekundärbatterie nach Anspruch 2, wobei das erste Ende des flexiblen Stromsammlers (140, 240, 340, 440) bezüglich des zweiten Endes des flexiblen Stromsammlers (140, 240, 340, 440) beweglich ist.

4. Sekundärbatterie nach einem der vorhergehenden Ansprüche, wobei der flexible Stromsammler (140, 240, 340, 440) Aluminium oder Kupfer aufweist oder daraus besteht.

5. Sekundärbatterie nach einem der vorhergehenden Ansprüche, wobei der flexible Stromsammler (140, 240, 340, 440) zumindest einen Draht aufweist.

6. Sekundärbatterie nach Anspruch 5, wobei der zumindest eine Draht eine Vielzahl von Drähten, die entlang einer Länge des flexiblen Stromsammlers (340) miteinander verdrillt sind, aufweist.

7. Sekundärbatterie nach einem der vorhergehenden Ansprüche, ferner aufweisend ein weitere Elektrodenanordnung (420) in der Dose (110), wobei die weitere Elektrodenanordnung (420) einen Beschichtungsabschnitt (421), der ein aktives Material darauf aufweist, und einen Nicht-Beschichtungsabschnitt (422) an einem Ende der weiteren Elektrodenanordnung (420) entlang der ersten Richtung aufweist.

8. Sekundärbatterie nach Anspruch 7, ferner aufweisend einen weiteren flexiblen Stromsammler (440), der elektrisch zwischen den Nicht-Beschichtungsabschnitt (422) der weiteren Elektrodenanordnung (420) und den Anschluss (150, 151) geschaltet ist.

9. Sekundärbatterie nach Anspruch 7, wobei der flexible Stromsammler (440) und der weitere flexible Stromsammler (440) jeweils die Elektrodenanordnung (420) und die weitere Elektrodenanordnung (420) mit dem Anschluss (150, 151) parallel zueinander schalten.

10. Sekundärbatterie nach einem der vorhergehenden Ansprüche, wobei der flexible Stromsammler (140, 240, 340, 440) eine kreisförmige Querschnittsform oder eine flache Form aufweist.

11. Sekundärbatterie nach einem der vorhergehenden Ansprüche, wobei der flexible Stromsammler (140, 240, 340, 440) mit einem Material, das aus der Gruppe bestehend aus Fluor-Elastomer, elastischem Kunststoff, Silizium, Fluor und Kombinationen derselben ausgewählt ist, beschichtet ist.

12. Sekundärbatterie nach einem der vorhergehenden Ansprüche, wobei der Nicht-Beschichtungsabschnitt (122, 422) der Elektrodenanordnung (120, 420) von der Dose (110) elektrisch isoliert ist.

## Revendications

1. Batterie secondaire (100, 200, 300, 400) comprenant :
un ensemble d'électrodes (120, 420) enroulé autour d'un axe s'étendant dans une première direction et comprenant une partie de revêtement (121, 421) ayant un matériau actif sur celle-ci, et une partie de non-revêtement (122, 422) au niveau d'une extrémité de l'ensemble d'électrodes (120, 420) ;
un boîtier (110) contenant l'ensemble d'électrodes (120, 420) ;
une plaque de capuchon (170) scellant une ouverture du boîtier (110) ;
une borne (150, 151) faisant saillie à l'extérieur du boîtier (110) ;
un collecteur de courant flexible (140, 240, 340, 440) relié électriquement entre la partie de non-revêtement (122, 422) de l'ensemble d'électrodes (120, 420) et la borne (150, 151) ; et
un élément d'isolation (160) prévu entre la plaque de capuchon (110) et la borne (150, 151), l'élément d'isolation (160) étant **caractérisé en ce qu'**il est entre et en contact avec le boîtier (110) et l'ensemble d'électrodes (120, 420) de sorte que l'élément d'isolation (160) fixe l'ensemble d'électrodes (120, 420) pour l'empêcher de se déplacer dans le boîtier (110).

2. Batterie secondaire de la revendication 1, dans laquelle une première extrémité du collecteur de courant flexible (140, 240, 340, 440) est couplée à la partie de non-revêtement (122, 422), et une deuxième extrémité du collecteur de courant flexible (140, 240, 340, 440) est couplée à la borne (150, 151).

3. Batterie secondaire de la revendication 2, dans laquelle la première extrémité du collecteur de courant flexible (140, 240, 340, 440) est mobile par rapport à la deuxième extrémité du collecteur de courant flexible (140, 240, 340, 440).

4. Batterie secondaire de l'une des revendications précédentes, dans laquelle le collecteur de courant flexible (140, 240, 340, 440) comporte ou est constitué d'aluminium ou de cuivre.

5. Batterie secondaire de l'une des revendications précédentes, dans laquelle le collecteur de courant flexible (140, 240, 340, 440) comprend au moins un fil.

6. Batterie secondaire de la revendication 5, dans laquelle l'au moins un fil comprend une pluralité de fils qui sont torsadés ensemble sur une longueur du collecteur de courant flexible (340).

7. Batterie secondaire de l'une des revendications précédentes, comprenant en outre un autre ensemble d'électrodes (420) dans le boîtier (110), l'autre ensemble d'électrodes (420) comprenant une partie de revêtement (421) ayant un matériau actif sur celle-ci, et une partie de non-revêtement (422) au niveau d'une extrémité de l'autre ensemble d'électrodes (420) le long de la première direction.

8. Batterie secondaire de la revendication 7, comprenant en outre un autre collecteur de courant flexible (440) relié électriquement entre la partie de non-revêtement (422) de l'autre ensemble d'électrodes (420) et la borne (150, 151).

9. Batterie secondaire de la revendication 7, dans laquelle le collecteur de courant flexible (440) et l'autre collecteur de courant flexible (440) relient respectivement l'ensemble d'électrodes (420) et l'autre ensemble d'électrodes (420) à la borne (150, 151) parallèlement l'un à l'autre.

10. Batterie secondaire de l'une des revendications précédentes, dans laquelle le collecteur de courant flexible (140, 240, 340, 440) a une forme de section transversale circulaire ou une forme plate.

11. Batterie secondaire de l'une des revendications précédentes, dans laquelle le collecteur de courant flexible (140, 240, 340, 440) est revêtu d'un matériau choisi dans le groupe consistant en un élastomère fluoré, une matière plastique élastique, le silicium, le fluor, et des combinaisons de ceux-ci.

12. Batterie secondaire de l'une des revendications précédentes, dans laquelle la partie de non-revêtement (122, 422) de l'ensemble d'électrodes (120, 420) est électriquement isolée du boîtier (110).
